(19) Europäisches Patentamt

European Patent Office

Office européen des brevets

(11) EP 1 259 040 A2

(12) EUROPEAN PATENT APPLICATION

(43) Date of publication:
20.11.2002 Bulletin 2002/47

(51) Int Cl.7: H04L 25/03

(21) Application number: 01309122.8

(22) Date of filing: 26.10.2001

(84) Designated Contracting States:
AT BE CH CY DE DK ES FI FR GB GR IE IT LI LU
MC NL PT SE TR
Designated Extension States:
AL LT LV MK RO SI

(30) Priority: 14.05.2001 JP 2001143878

(71) Applicant: Hitachi Kokusai Electric Inc.
Tokyo (JP)

(72) Inventors:
• Kawahara,Nobuaki, Hitachi Kokusai Electric Inc.
Tokyo (JP)
• Naito, Masashi, Hitachi Kokusai Electric Inc.
Tokyo (JP)

(74) Representative: Haley, Stephen
Gill Jennings & Every,
Broadgate House,
7 Eldon Street
London EC2M 7LH (GB)

(54) Equalisation for QAM signals

(57) An equalizer and equalization method as well as a receiver and reception method are provided which have little deterioration of the error rate characteristic even at a low oversampling rate in order to overcome the disadvantages of symbol synchronization and demodulation processing at a high oversampling rate, which is the problem of the QAM system. The equalizer equalizes a detection signal obtained by detecting a transmission signal with periodically inserted known symbol patterns made up of at least one symbol. The equalizer is constructed of a frame/symbol synchronization circuit 207 for reproducing symbol timing by detecting the symbol pattern based on the detection signal, an equalization processing section 203 for obtaining an equalization signal by multiplying signals extracted from the detection signal at predetermined intervals with weights, a pilot symbol pattern generator 205 for generating a reference signal which is equal to the symbol pattern, a subtracter 206 for acquiring an equalization error by subtracting the equalization signal from the reference signal and a weight control circuit 208 for updating weights based on the detection signal and equalization error at the timing of the symbol pattern.

Fig. 1

EP 1 259 040 A2

**Description**

The present invention relates to a digital radio communication, and more particularly, an equalizer and equalization method as well as a receiver and reception method introduced to a pilot symbol insertion type modulation system.

The pilot symbol insertion type modulation system, which is a modulation system to which the present invention applies, is described, for example, in "Transmission Path Distortion Compensation System" disclosed in Japanese Patent Publication No. 6-1908 and Reference 1: "16 QAM Fading Distortion Compensation System for Terrestrial Mobile Communications" (Sanpei, et al., Institute of Electronics, Information and Communication Engineers Collected Papers B-II, Vol. J72-B-II No.1 pp7-15, January 1989). This system enables M-ary Quadrature Amplitude Modulation to be applied to terrestrial mobile communications by inserting pilot symbols for measuring transmission distortion in M-ary Quadrature Amplitude Modulation and improves the efficiency of frequency utilization using M-ary Quadrature Amplitude Modulation. Hereinafter, the pilot symbol insertion type modulation system will be referred to as PSI (Pilot Symbol Insertion) modulation system.

Conventionally, it is considered difficult, in mobile communications, to adopt a system like a QAM (Quadrature Amplitude Modulation) system, which also distributes information to an amplitude component. However, the PSI modulation system has enabled a coherent detection, which is excellent in an bit error rate performance, to be also applied to terrestrial mobile communications in a fading environment. Moreover, the PSI modulation system is an excellent system implemented with pilot symbols not contributing to information transmission suppressed to 10% or less.

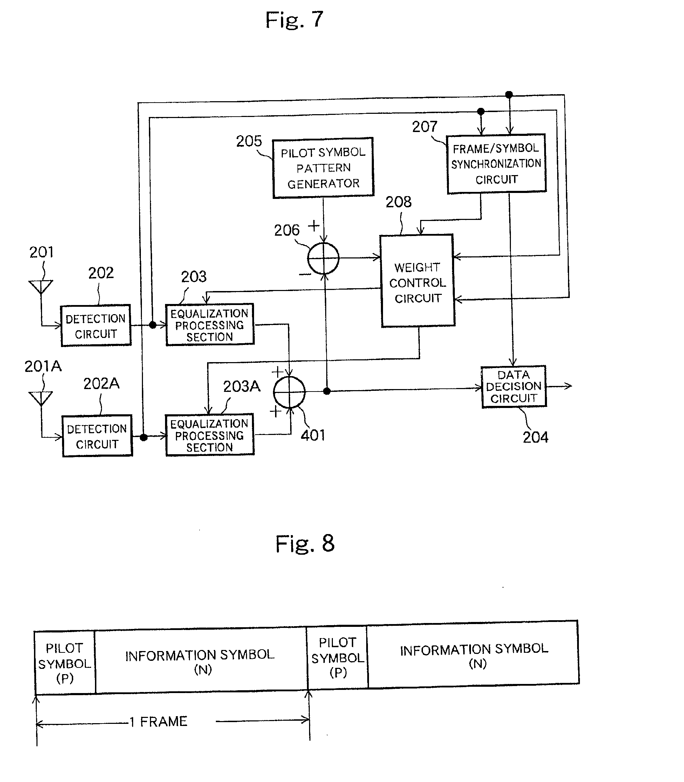

Here, a frame format, which is a feature of the PSI modulation system, will be explained. FIG. 8 illustrates a frame format, which is a feature of the PSI modulation system. One frame consists of an N-symbol information symbol to be sent followed by a P-symbol pilot symbol. Here, adopting a large N/P will improve the information transmission efficiency. Since the PSI modulation system can set P to 1 and N to 16 or more, the information transmission efficiency N/(P+N) becomes 16/17 or more, implementing nearly 100% information transmission efficiency.

Furthermore, Reference 2: "16 QAM/TDMA-Based Symbol Timing Reproduction System" (Sanpei, et al., TECHNICAL REPORT of Institute of Electronics, Information and Communication Engineers (RCS92-106 (1993-01)) is proposed in association with the above-described PSI modulation system. The MAM (Maximum Amplitude Method) used here is a method of using a sample showing a maximum amplitude as a synchronization point. Provided that a known frame symbol has a maximum amplitude, a simulation result confirms that if the frame length is a few tens of symbols and the oversampling number is 32 times, the MAM can obtain a satisfactory bit error rate performance.

On the other hand, Reference 3: "Simplified Decision Feedback Equalizer Using Interpolation" (Sanbe, et al., TECHNICAL REPORT OF Institute of Electronics, Information and Communication Engineers (CS91-22 (1991-06)) is proposed in association with a adaptive equalizer. According to this proposal, it is possible to implement an interpolation type simple DFE (Decision Feedback Equalizer) capable of drastically reducing the amount of calculations required for equalization by finding an optimal tap gain using a Kalman algorithm at a preamble and postamble provided at the start and end of a TDMA burst, respectively, and calculating a tap gain for the data section between the preamble and postamble by interpolating the tap gain calculated from the training section.

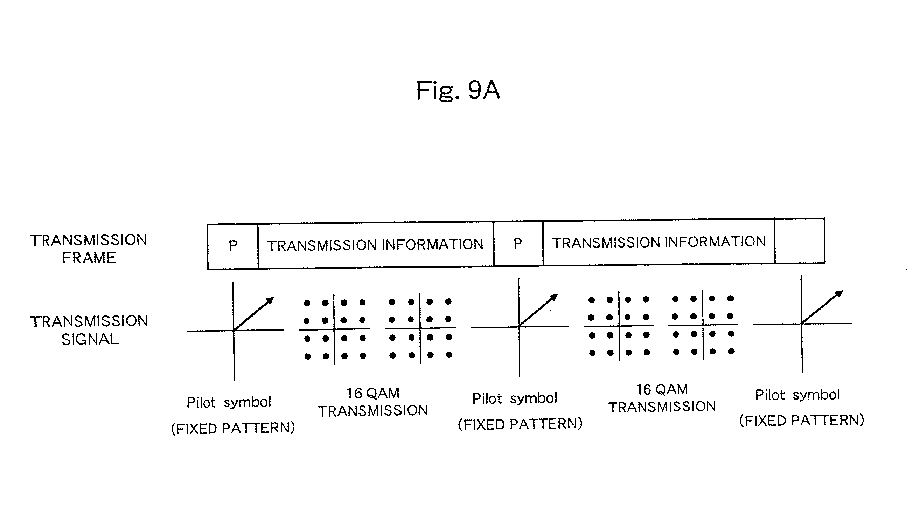

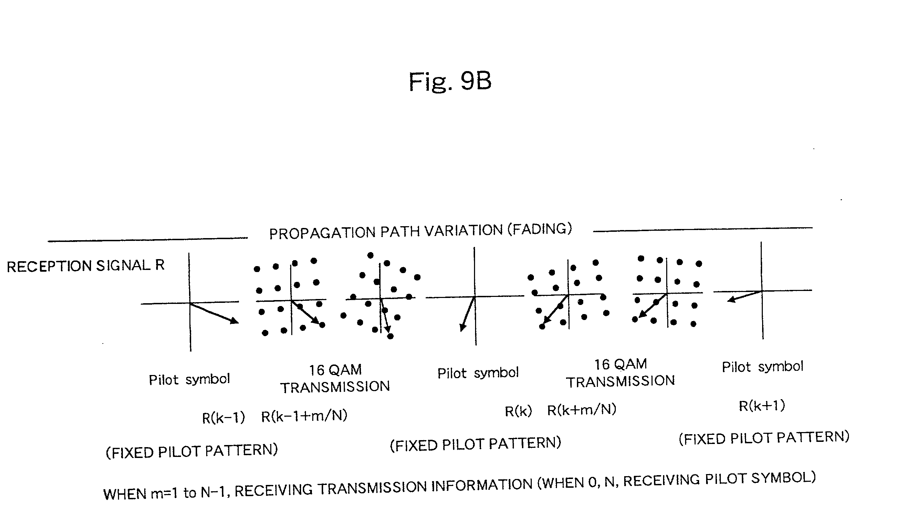

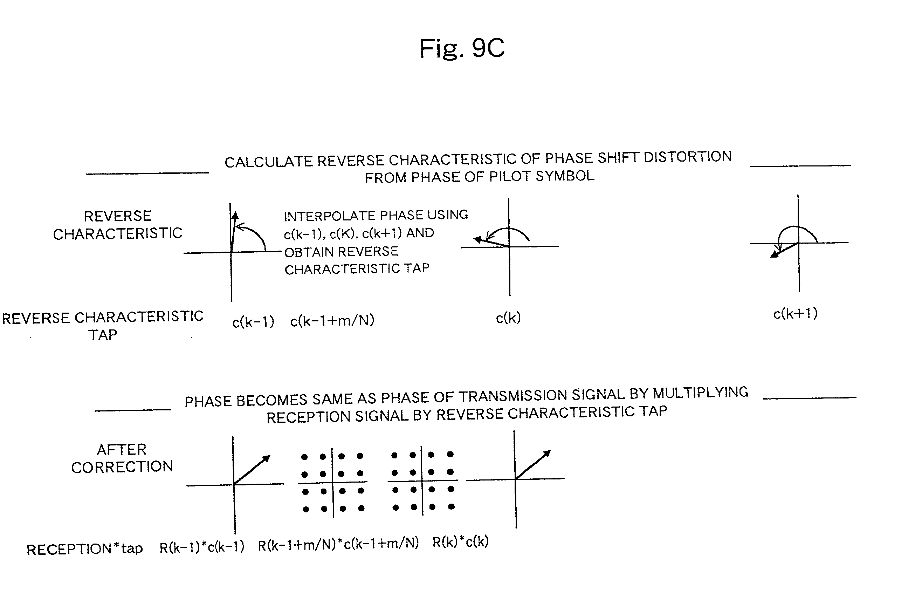

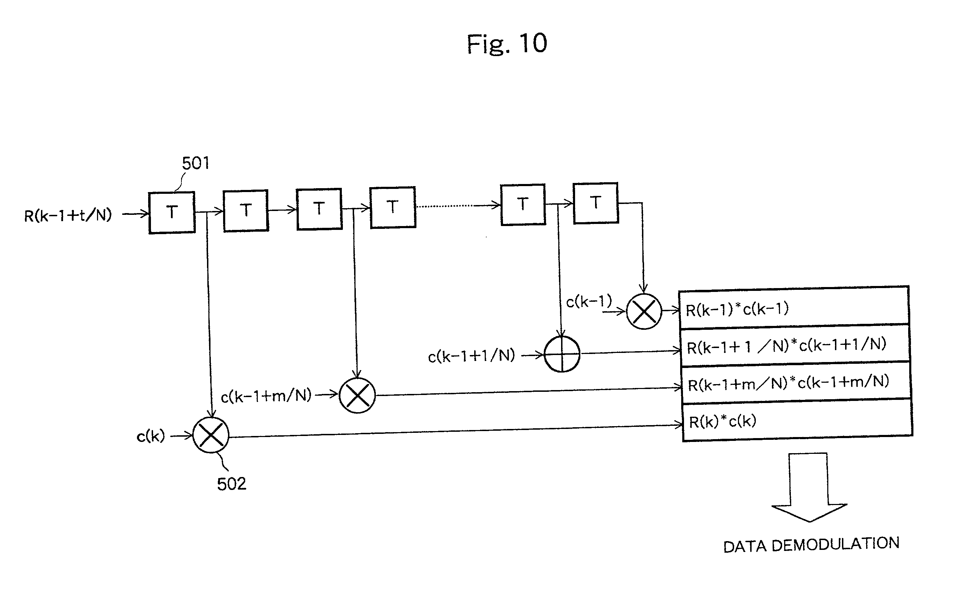

Then, conventional fading distortion compensation will be explained using FIGS. 9A through 9C and FIG. 10. FIGs. 9A through 9C illustrate waveforms of pilot symbols and information symbols. FIG. 9A illustrates a transmission waveform, FIG. 9B illustrates a reception waveform and FIG. 9C illustrates a phase difference of the reception waveform from the transmission waveform and a waveform with the phase difference compensated.

As shown in FIG. 9A, the transmitter transmits a frame consisting of a pilot symbol and information symbol periodically. The upper row of FIG. 9A shows a transmission frame and the lower row shows the respective symbols on a complex plane. On the other hand, as shown in FIG. 9B, the receiver receives a signal whose phase has been changed due to a variation in the propagation path due to fading, etc. Suppose one frame consists of N symbols and the symbol order is expressed by m=0 to (N-1). m=0, N indicates a pilot symbol and m=1 to (N-1) indicates an information symbol. Furthermore, the frame order is i and the reception symbol is expressed with R(i).

As shown in FIG. 9C, by calculating a reverse characteristic tap c(i) from the phase difference of the reception waveform with respect to the transmission waveform in a pilot symbol and multiplying the reception signal R(i) by the reverse characteristic tap c(i), the distortion of the reception waveform is compensated and its phase becomes equal to the phase of the transmission waveform. FIG. 10 is a block diagram showing an example of a conventional circuit configuration for fading distortion compensation. This block diagram is constructed of a combination of a plurality of delay units 501 and multipliers 502. As shown in the above-described calculations, the multipliers 502 multiply the reception signal R(i) delayed by the delay units 501 by the reverse characteristic tap c(i) with respect to the reception signal R(i) and carry out distortion compensation.

However, in a multi-level coding system such as a QAM system, since the inter-code distance between mapping points in the same symbol is small, there is a problem of demodulation error deterioration due to symbol synchronization shifts.

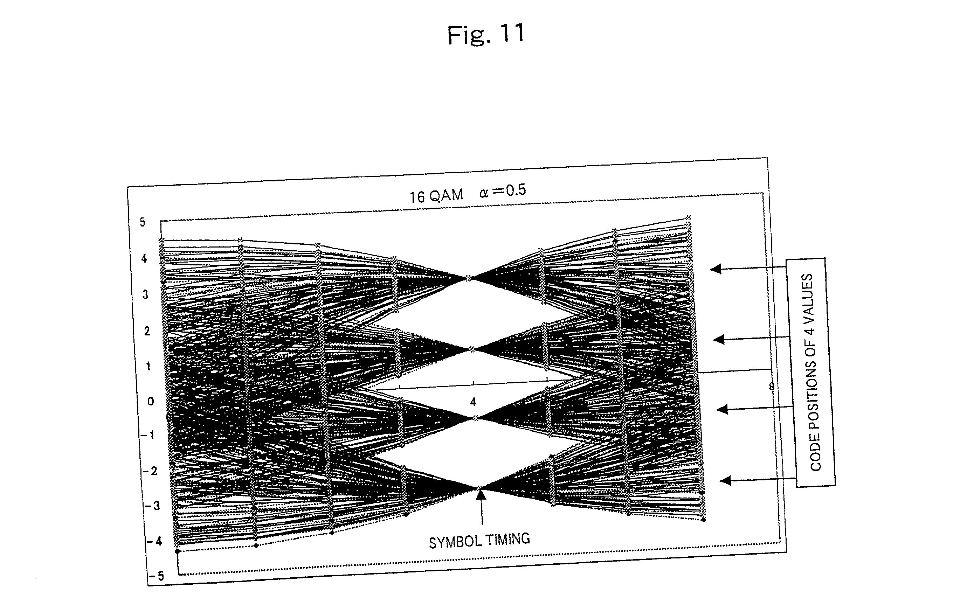

FIG. 11 illustrates an example of a transmission eye pattern before quadrature demodulation with a 16 QAM. FIG. 11 is obtained by overlapping 1-symbol durations of a plurality of symbol patterns. The horizontal axis denotes the time. The oversampling number is 8 times. A roll-off factor $\alpha$=0.5.

When a code decision is made on the received signal (a 4-value code in the case of FIG. 11), if data is demodulated at symbol timing, that is, timing at which the inter-code distance from the neighboring code is the largest, influences of noise becomes smaller and the error rate characteristic becomes the best. On the contrary, if data is demodulated at timing at which the distance from the neighboring code is small, that is, at timing shifted from the symbol timing, influences of noise becomes larger and the error rate characteristic deteriorates.

It is apparent from FIG. 11 that the inter-code distance becomes smaller (the eye is closed) as the horizontal distance from the symbol timing in the center grows. It is also apparent that when the timing is shifted by 1.5 samples from the symbol timing in the center, it is impossible to realize an error-free condition even if in a noise free condition. It is also apparent that when shifted by one sample (1/8 symbol) from the symbol timing in the center, the inter-code distance from other codes is small and there is almost no margin with respect to noise level.

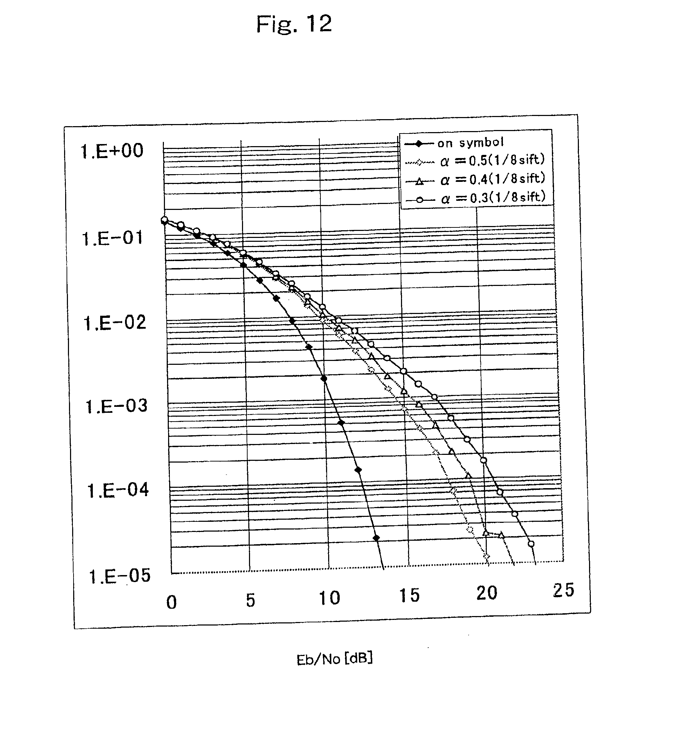

FIG. 12 illustrates an example of error rate characteristic simulation results. The horizontal axis in FIG. 12 denotes $E_b/N_0$ and the vertical axis denotes the error rate. From FIG. 12, it is apparent that the deterioration of the error rate characteristic caused by a shift of one sample (1/8 symbol) from the symbol timing in the center is 6dB or more at the point of an error rate of $10^{-5}$, and especially when the roll-off rate $\alpha$ is small (the band is narrowed), the deterioration is large. Thus, the accuracy of a symbol synchronization shift varies depending on how many times the symbol rate the sampling rate for reception A/D conversion is, that is, the oversampling rate, and therefore, signal processing at a higher oversampling rate is required.

Eliminating influences of symbol synchronization errors normally requires A/D conversion to be carried out at an oversampling rate 32 times the symbol rate. However, when signal processing is carried out with a processor such as a DSP, an increase in the information rate or oversampling rate will cause an increase in a required processing power of the processor and is restricted by the limitations of processing power. Improving the information rate with the restricted DSP throughput will require an equalization system that can be implemented at a low oversampling rate.

Furthermore the above-described adaptive equalizer normally requires a training pattern of 10 symbols or more and an increase in the length of the training pattern would degrade the information transmitting rate.

The present invention is intended to obviate the problems as referred to above and has for its object to provide an equalizer and equalization method as well as a receiver and reception method with little deterioration of the error rate characteristic even when a low oversampling rate or a short, known symbol pattern is used in order to overcome the disadvantages of symbol synchronization and demodulation processing at a high oversampling rate, which is the problem of the QAM system.

Bearing the above object in mind, according to a first aspect of the present invention, there is provided an equalizer for equalizing a detection signal obtained by detecting a transmission signal with periodically inserted known symbol patterns made up of at least one symbol, the apparatus comprising: symbol pattern synchronizing means for reproducing symbol timing by detecting the symbol patterns based on the detection signal; equalizing means for acquiring an equalization signal by multiplying signals extracted from the detection signal at predetermined intervals and weights; symbol pattern generating means for generating a reference signal equal to the symbol pattern; error calculating means for acquiring an equalization error by subtracting the equalization signal from the reference signal; and weight updating means for updating the weights based on the detection signal and the equalization error at the timing of the symbol pattern.

With this arrangement, carrying out weight updating every time a symbol pattern is received makes it possible to respond to a slow variation of the reception propagation path due to fading, etc. and thereby drastically reduce the amount of DSP signal processing.

According a second aspect of the present invention, there is provided a receiver for carrying out diversity receiver for a transmission signal with periodically inserted known symbol patterns made up of at least one symbol, the apparatus comprising: a plurality of antennas for receiving the transmission signal; a plurality of detecting means for carrying out quadrature detection on the reception signals from the corresponding antennas; a plurality of equalizers for carrying out equalization using the outputs of the corresponding detecting means; selecting means for selecting the outputs of the plurality of equalizers; and data decision means for deciding data based on the output of the selecting means, wherein each of the plurality of equalizers comprises: symbol pattern synchronizing means for reproducing symbol timing by detecting the symbol patterns based on the output signals of the detecting means; equalizing means for acquiring an equalization signal by multiplying signals extracted from the detection signal at predetermined intervals and weights; symbol pattern generating means for generating a reference signal equal to the symbol pattern; error calculating means for acquiring an equalization error by subtracting the equalization signal from the reference signal; and weight updating means for updating the weights based on the detection signal and the equalization error at the timing of the symbol pattern.

With this arrangement, carrying out selection diversity receiver makes it possible to acquire excellent reception quality even in a fading propagation path environment and drastically reduce the amount of DSP signal processing.

According to a third aspect of the present invention, there is provided a receiver for carrying out diversity receiver for a transmission signal with periodically inserted known symbol patterns made up of at least one symbol, the apparatus comprising: a plurality of detecting means for carrying out quadrature detection on the reception signals from the corresponding antennas; symbol pattern synchronizing means for reproducing symbol timing by detecting the symbol patterns based on the plurality of detection signals; one or more equalizing means for acquiring equalization signals by multiplying signals extracted from the outputs of the corresponding detecting means at predetermined intervals and weights; combining means for combining the outputs of the plurality of equalization signals; symbol pattern generating means for generating a reference signal equal to the symbol pattern; error calculating means for acquiring an equalization error by subtracting the equalization signal from the reference signal; one or more weight updating means for updating weights based on the corresponding detection signals and the corresponding equalization errors at the timing of the symbol pattern; and data decision means for deciding data based on the output of the combining means.

With this arrangement, carrying out combination diversity receiver makes it possible to acquire excellent reception quality in a fading propagation path environment and drastically reduce the amount of DSP signal processing.

In a preferred form of any of the first through third aspects of the present invention, the weight updating means updates the weights using an error power minimizing algorithm.

Thus, the use of an error power minimizing algorithm improves the accuracy and converging speed of the tap coefficient.

According to a fourth aspect of the present invention, there is provided an equalization method for carrying out equalization processing, comprising: a step of equalizing a detection signal obtained by detecting a transmission signal with periodically inserted known symbol patterns made up of at least one symbol; and a step of detecting a symbol synchronization position by detecting the symbol patterns based on the detection signal, wherein equalization processing is carried out based on weights updated when the synchronization position of the detection signal is detected, whereas equalization processing is carried out without weight updating when the synchronization position of the detection signal is not detected.

With this method, carrying out weight updating every time a symbol pattern is received makes it possible to respond to a slow variation of the reception propagation path due to fading, etc. and thereby drastically reduce the amount of DSP signal processing.

According to a fifth aspect of the present invention, there is provided a reception method for carrying out diversity receiver for a transmission signal with periodically inserted known symbol patterns made up of at least one symbol, the method comprising: a reception step of receiving the transmission signal by a plurality of antennas; a detecting step of carrying out quadrature detection on received signals from the corresponding antennas using a plurality of detecting means; a plurality of equalizing steps of carrying out equalization using the outputs of the corresponding detecting means; a selecting step of selecting processing results obtained by the plurality of equalizing steps corresponding to the plurality of detecting means; and a deciding step of deciding data based on the selected processing result, wherein each of the plurality of equalizing steps comprises: a step of equalizing a detection signal obtained by detecting a transmission signal with periodically inserted known symbol patterns made up of at least one symbol; and a step of detecting a symbol synchronization position by detecting the symbol patterns based on the detection signals, wherein equalization processing is carried out based on weights updated when the synchronization position of the detection signal is detected, whereas equalization processing is carried out without weight updating when the synchronization position of the detection signal is not detected.

With this method, carrying out selection diversity receiver makes it possible to acquire excellent reception quality even in a fading propagation path environment and drastically reduce the amount of DSP signal processing.

According to a sixth aspect of the present invention, there is provided a reception method for carrying out diversity receiver for a transmission signal with periodically inserted known symbol patterns made up of at least one symbol, the method comprising: a step of receiving the transmission signal by a plurality of antennas; a step of carrying out quadrature detection on received signals from the corresponding antennas using a plurality of detecting means; and a step of detecting a symbol synchronization position by detecting the symbol patterns based on the plurality of detection signals, wherein equalization processing is carried out based on weights updated when the synchronization position of the detection signal is detected, whereas equalization processing is carried out without weight updating and the respective outputs of equalization processing are combined with each other when the synchronization position of the detection signal is not detected.

According to a seventh aspect of the present invention, there is provided a reception method for carrying out diversity receiver for a transmission signal with periodically inserted known symbol patterns made up of at least one symbol, the method comprising: a step of receiving the transmission signal by a plurality of antennas; a step of carrying out quadrature detection on received signals from the corresponding antennas using a plurality of detecting means; a step of detecting a symbol synchronization position by detecting the symbol pattern based on detection signals output from the plurality of detecting means, wherein equalization processing is carried out based on weights respectively updated when the synchronization position of the detection signal is detected, whereas equalization processing is carried out without updating of respective weights and the respective outputs of equalization processing are combined with each other when the synchronization position of the detection signal is not detected.

With the above methods according to the sixth and seventh aspects of the present invention, carrying out combination diversity receiver makes it possible to acquire excellent reception quality in a fading propagation path environment and drastically reduce the amount of DSP signal processing.

In a preferred form of any of the fourth through seventh aspects of the present invention, the weight updating is carried out using an error power minimizing algorithm.

Thus, the use of an error power minimizing algorithm improves the accuracy and converging speed of the tap coefficient.

The above and other objects, features and advantages of the present invention will become more readily apparent to those skilled in the art from the following detailed description of preferred embodiments of the present invention taken in conjunction with the accompanying drawings.

In the Drawings;

FIG. 1 is a block diagram showing a configuration example of a receiver using a single branch according to a first embodiment of the present invention;
FIG. 2 is a block diagram showing a configuration example of an equalization processing section;
FIG. 3 illustrates an example of mapping positions of known pilot symbols;
FIG. 4 is a flow chart showing an operation of weight updating carried out every time the symbol synchronization position of a known symbol is detected;
FIG. 5 is a block diagram showing a configuration example of a receiver using selection diversity according to a second embodiment of the present invention;
FIG. 6 is a block diagram showing a configuration example of a receiver using combination diversity according to a third embodiment of the present invention;
FIG. 7 is a block diagram showing an example where one weight control circuit is used in the third embodiment;
FIG. 8 illustrates a frame format according to a PSI modulation system;
FIG. 9 illustrates a relationship between a pilot symbol and an information symbol;
FIG. 10 illustrates an example of a conventional circuit configuration for fading distortion compensation;
FIG. 11 illustrates an example of a transmission eye pattern before quadrature demodulation with a 16 QAM; and
FIG. 12 illustrates an example of error rate characteristic simulation results.

Now, preferred embodiments of the present invention will be described below in detail while referring to the accompanying drawings.

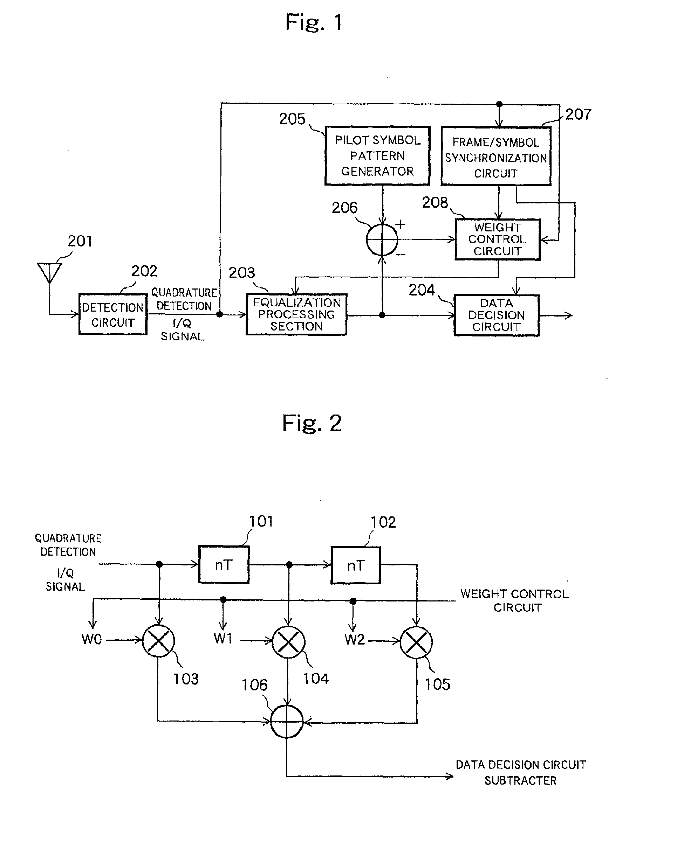

FIG. 1 is a block diagram showing a configuration example of a receiver using a single branch according to a first embodiment of this invention. As shown in FIG. 1, this block diagram includes an antenna 201, a detection section 202, an equalization processing section 203, a data decision circuit 204, a pilot symbol pattern generator 205, a subtracter 206, a frame/symbol synchronization circuit 207 and a weight control circuit 208.

In this embodiment, the equalizing means is the equalization processing section 203, the symbol pattern generating means is the pilot symbol pattern generator 205, the error calculating means is the subtracter 206, the symbol pattern synchronizing means is the frame/symbol synchronization circuit 207 and the weight updating means is the weight control circuit 208. In this embodiment, a symbol pattern is a pilot symbol pattern made up of at least one pilot symbol.

Then, an operation of the block diagram shown in FIG. 1 will be explained. A reception signal received by the antenna 201 is subjected to quadrature detection by the detection section 202, and is output as a quadrature detection I/Q signal to the equalization processing section 203, the frame/symbol synchronization circuit 207 and the weight control circuit 208.

Here, the equalization processing section 203 will be explained using FIG. 2. FIG. 2 is a block diagram showing a configuration example of the equalization processing section. As shown in FIG. 2, this block diagram is constructed of n-sample delay units 101 and 102, complex weight multipliers 103, 104 and 105 and an adder 106. Here, suppose the digitized quadrature detection I/Q signal is represented by R(t).

Then, an operation of the block diagram shown in FIG. 2 will be explained. The n-sample delay unit 101 outputs R(t-nT), which is the result of delaying R(t) by nT, to the n-sample delay units 102 and complex weight multiplier 104. Here, T denotes an A/D converted 1-sample time. The n-sample delay unit 102 outputs R(t-2nT), which is the result of delaying R(t-nT) by nT to the complex weight multiplier 105.

The complex weight multiplier 103 outputs $W_0 \cdot R(t)$ that is the result of multiplying R(t) by the complex weight W0 from the weight control circuit 208 to the adder 106. Likewise, the complex weight multiplier 104 outputs W1·R(t-nT) which is the result of multiplying R(t-nT) by the complex weight W1 from the weight control circuit 208 to the adder 106 while the complex weight multiplier 105 outputs W2·R(t-2nT) which is the result of multiplying R(t-2nT) by the complex weight W2 from the weight control circuit 208 to the adder 106.

The adder 106 outputs the result of adding up the outputs from the complex weight multipliers 103, 104 and 105 as an equalization output G(t) to the data decision circuit 204 and subtracter 206. The equalization output G(t) is expressed by the following expression:

$$G(t) = W0·R(t) + W1·R(t-nT) + W2·R(t-2nT) \quad (1)$$

This is the example of the operation of the equalization processing section 203. The data decision circuit 204 outputs the value closest to the equalization output G(t) of the transmission QAM symbol mapping values as demodulated data to the outside at the symbol timing from the frame/symbol synchronization circuit 207.

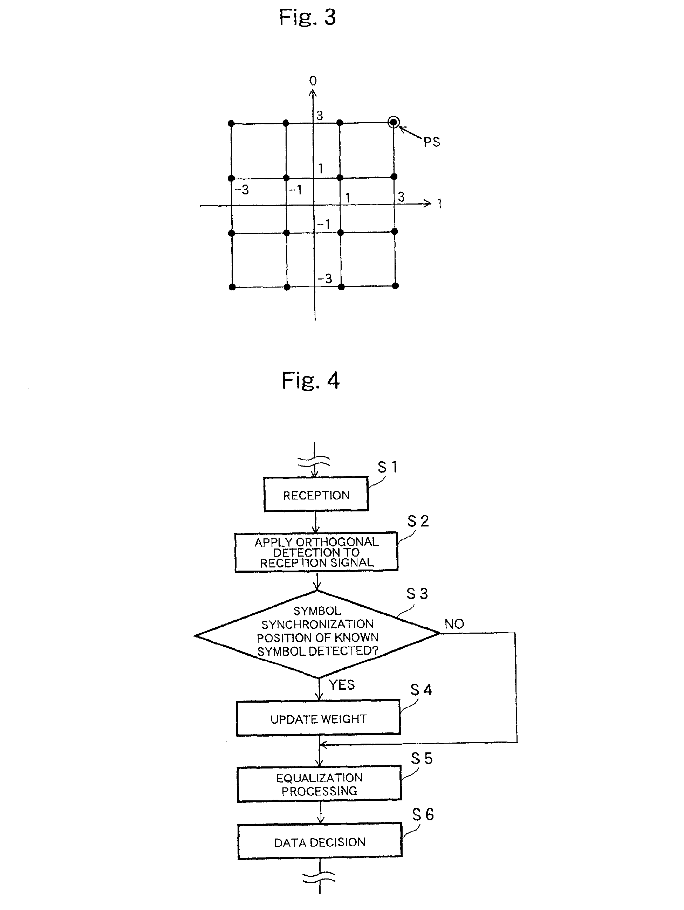

As described in the Reference 1, the pilot symbol pattern generator 205 outputs one of the 16 QAM symbol mapping values used as a pilot symbol pattern to the subtracter 206 as a reference pilot symbol pattern. FIG. 3 illustrates an example of mapping positions of known pilot symbols. As shown in FIG. 3, known pilot symbols are mapped for both I and Q phases in such a way as to take maximum positive values. Here, the number of pilot symbol patterns required is not more than 4 symbols, which is by far smaller than the conventional art. Moreover, it is possible to drastically reduce the amount of DSP signal processing without reducing the information transmission efficiency. The subtracter 206 outputs the result of subtracting the equalization output G(t) from the reference pilot symbol pattern as an equalization error E(t) to the weight control circuit 208.

Since the frame/symbol synchronization circuit 207 gives the pilot symbol pattern the maximum amplitude of the 16 QAM, it detects a frame timing and symbol timing from R(t) using the maximum average power point in the frame as the pilot symbol position and outputs the frame timing and symbol timing to the weight control circuit 208 and data decision circuit 204.

The weight control circuit 208 calculates optimal complex weights W0 to W2 from the equalization error E(t) and R(t) at the frame timing and outputs them to the equalization processing section 203.

Here, the method of calculating the optimal complex weights W0 to W2 will be explained. To calculate the optimal complex weights W0 to W2, an error power minimizing algorithm such as an LMS (Least Mean Square error) and RLS (Recursive Least Square). For example, the LMS is expressed as shown in the following expression (2):

$$Wn = Wn + \mu·E(t)·R(t-nT) \quad (2)$$

where $\mu$ is a forgetting factor and is a positive number not smaller than 0 and not greater than 1. The weight control circuit 208 carries out the calculation in expression (2) once per frame at the frame timing. The weight control circuit 208 controls the complex weights W0, W1 and W2 so that the equalization error E(t), which is the result of subtracting the equalization output G (t) from the originally sent known reference pilot symbol pattern, becomes a minimum.

The phase and amplitude of the received pilot symbol fluctuate slowly due to a variation in the radio propagation path. If there is no variation of the radio propagation path, there is no variation of complex weights either, and therefore for the information symbol after the pilot symbol pattern, information symbols are demodulated by using the same complex weight that has been updated upon reception of the pilot symbol pattern and equalizing.

In the above-described operation, the weight control circuit updates weights every time the symbol synchronization position of a known symbol is detected and has a configuration different from the conventional case where weights are updated for every symbol. FIG. 4 is a flow chart showing the operation. After reception (step S1), a reception signal is subjected to quadrature detection (step S2) and it is judged whether the symbol synchronization position of the known symbol is detected or not (step S3). If detected (step S3, Yes), weights are updated (step S4), equalization processing is carried out (step S5) and data decision is made (step S6). In step S3, if the symbol synchronization position of the known symbol is not detected (step S3, No), weights are not updated in step S4 and equalization processing in step S5 is performed.

This embodiment describes the 3-tap configuration with a delay unit interval of nT, but as far as there are at least two taps, the number of taps causes no problem in terms of configuration. Normally, it is desirable to have a time corresponding to approximately 1/2 symbol as the delay unit interval nT. However, a similar effect can be expected from an nT, which is not smaller than 1/8 sample and not greater than 1/2 symbol.

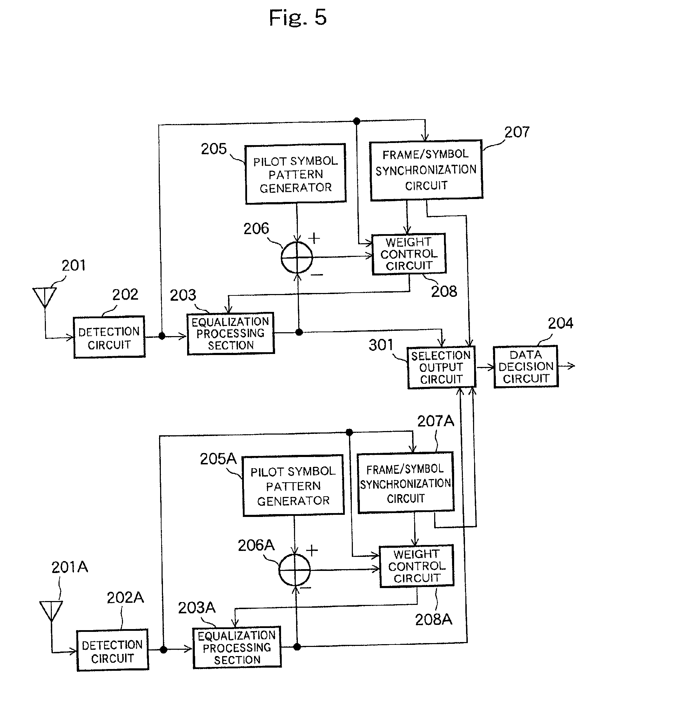

A second embodiment of the present invention uses a selection diversity receiver system. FIG. 5 is a block diagram showing a configuration example of a receiver using selection diversity according to this embodiment. As shown in FIG. 5, this block diagram is constructed of antennas 201 and 201A, detection sections 202 and 202A, equalization processing sections 203 and 203A, a data decision circuit 204, pilot symbol pattern generators 205 and 205A, subtracters 206 and 206A, frame/symbol synchronization circuits 207 and 207A, weight control circuits 208 and 208A and a selection output circuit 301. Furthermore, reference numerals 201A to 203A and 205A to 208A in FIG. 5 have configurations similar to those of reference numerals 201 to 203 and 205 to 208 in FIG. 1.

In this embodiment, the detecting means is the detection sections 202 and 202A, the data decision means is the data decision circuit 204 and the selecting means is the selection output circuit 301. In this embodiment, a symbol pattern is a pilot symbol pattern made up of at least one pilot symbol.

Then, an operation of the block diagram shown in FIG. 5 will be explained. The same reference numerals as those in FIG. 1 denote the same sections as or sections equivalent to the sections shown in FIG. 1 and explanations thereof will be omitted here. This block diagram provides two systems obtained by removing the data decision circuit 204 from the block diagram in FIG. 1 explained in Embodiment 1 placed in parallel. An equalization output G1(t) of the equalization processing section 203 and a frame timing and symbol timing from the corresponding frame/symbol synchronization circuit 207, and an equalization output G2(t) of the equalization processing section 203A and a frame timing and symbol timing from the corresponding frame/symbol synchronization circuit 207A are output to the selection output circuit 301.

The selection output circuit 301 selects either the equalization output G1(t) of the equalization processing section 203 or the equalization output G2(t) of the equalization processing section 203A, whichever is of higher quality, and outputs the selected equalization output and corresponding frame timing and symbol timing to the data decision circuit 204. Of the transmission QAM symbol mapping values, the data decision circuit 204 outputs the value closest to the selected equalization output to the outside as the demodulated data at the selected symbol timing.

This embodiment assumes the number of selection diversity branches is 2, but it is also possible to have two or more selection diversity branches.

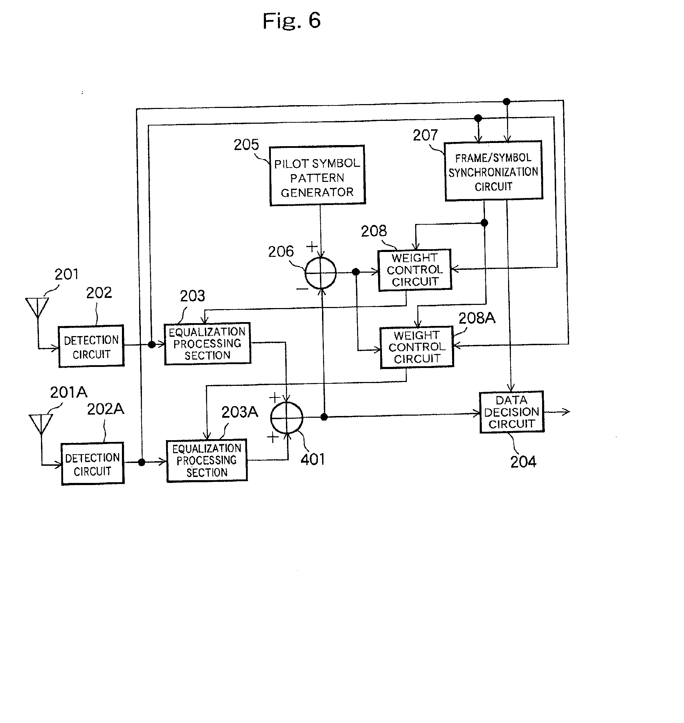

A third embodiment of the present invention uses a combination diversity reception system. FIG. 6 is a block diagram showing a configuration example of a receiver using combination diversity according to this embodiment. As shown in FIG. 6, this block diagram is constructed of antennas 201 and 201A, detection sections 202 and 202A, equalization processing sections 203 and 203A, a data decision circuit 204, a pilot symbol pattern generator 205, a subtracter 206, a frame/symbol synchronization circuits 207, weight control circuits 208 and 208A and an adder 401. Furthermore, reference numerals 201A to 203A and 208A in FIG. 6 have configurations similar to those of reference numerals 201 to 203 and 208 in FIG. 1.

In this embodiment, the detecting means is the detection sections 202 and 202A, the equalizing means is the equalization processing sections 203 and 203A, the data decision means is the data decision circuit 204, the symbol pattern generating means is the pilot symbol pattern generator 205, the error calculating means is the subtracter 206, the symbol pattern synchronizing means is the frame/symbol synchronization circuit 207, the weight updating means is the weight control circuits 208 and 208A, and the combining means is the adder 401. In this embodiment, a symbol pattern is a pilot symbol pattern made up of at least one pilot symbol.

Then, an operation of the block diagram shown in FIG. 6 will be explained. The same reference numerals in FIG. 6 as those in FIG. 1 denote the same sections as or sections equivalent to the sections shown in FIG. 1 and explanations thereof will be omitted here. A reception signal received by the antenna 201 is subjected to quadrature detection by the detection section 202, and output as a quadrature detection I/Q signal R1(t) to the equalization processing section 203, frame/symbol synchronization circuit 207 and weight control circuit 208. On the other hand, a reception signal received by the antenna 201A is subjected to quadrature detection by the detection section 202A, and output as a quadrature detection I/Q signal R2(t) to the equalization processing section 203A, frame/symbol synchronization circuit 207 and weight control circuit 208A.

An equalization output G1(t) from the equalization processing section 203 and an equalization output G2(t) from the equalization processing section 203A are added up by the adder 401 and the resultant equalization output G1(t) + G2(t) is output to the data decision circuit 204 and subtracter 206.

Of the transmission QAM symbol mapping values, the data decision circuit 204 outputs the value closest to the equalization output G1(t)+ G2(t) to the outside as the demodulated data at the symbol timing from the frame/symbol synchronization circuit 207.

The subtracter 206 outputs the result of subtracting the equalization output G1(t) + G2(t) from the reference pilot symbol pattern output from the pilot symbol pattern generator 205 to the weight control circuit 208 and weight control circuit 208A as an equalization error E(t).

The frame/symbol synchronization circuit 207 detects optimal frame timing and symbol timing using the R1(t) and R2(t) and outputs the frame timing and symbol timing to the weight control circuit 208 and weight control circuit 208A and data decision circuit 204.

The weight control circuit 208 calculates the optimal weights W0 to W2 from the equalization error E(t) and R1(t) at the frame timing of the equalization output G1(t)+G2(t) and outputs to the equalization processing section 203. On the other hand, the weight control circuit 208A calculates the optimal weights W0 to W2 from the equalization error E(t) and R2(t) at the frame timing of the equalization output G1(t)+G2(t) and outputs to the equalization processing section 203A.

This embodiment assumes the number of combination diversity branches is 2, but it is also possible to have two or more combination diversity branches.

Moreover, this embodiment assumes the number of weight control circuits is 2, but it goes without saying that it is also possible to have one weight control circuit.

As detailed above, according to the present invention, the demodulation processing according to a QAM modulation system using a PSI modulation system updates a plurality of weights once per frame and every time a pilot symbol pattern is received, thus making it possible to respond to a slow variation of the reception propagation path due to fading, etc. Furthermore, setting the interval between delay units to 1/2 symbol provides an oversampling rate at least twice the symbol rate, making it possible to drastically reduce the amount of DSP signal processing. Furthermore, reducing the number of known symbol pattern symbols to 4 or less makes it possible to drastically reduce the amount of DSP signal processing without reducing the information transmission efficiency.

For example, when a reception signal with a symbol rate of 10ksym/sec is processed, the oversampling rate of the present invention is 20kHz compared to the oversampling rate of 320kHz in Reference 1, and the amount of signal processing required is simply 1/16. Furthermore, a reduction of the oversampling rate at receiver A/D conversion allows a drastic reduction in the circuit and power consumption.

While the invention has been described in terms of preferred embodiments, those skilled in the art will recognize that the invention can be practiced with modifications within the spirit and scope of the appended claims.

**Claims**

1. An equalizer for equalizing a detection signal obtained by detecting a transmission signal with periodically inserted known symbol patterns made up of at least one symbol, said equalizer comprising:

    symbol pattern synchronizing means for reproducing symbol timing by detecting said symbol patterns based on said detection signal;
    equalizing means for acquiring an equalization signal by multiplying signals extracted from said detection signal at predetermined intervals and weights;
    symbol pattern generating means for generating a reference signal equal to said symbol pattern;
    error calculating means for acquiring an equalization error by subtracting said equalization signal from said reference signal; and
    weight updating means for updating said weights based on said detection signal and said equalization error at the timing of said symbol pattern.

2. The equalizer according to claim 1, wherein said weight updating means updates said weights using an error power minimizing algorithm.

3. A receiver for carrying out diversity receiver for a transmission signal with periodically inserted known symbol patterns made up of at least one symbol, said receiver comprising:

    a plurality of antennas for receiving said transmission signal;
    a plurality of detecting means for carrying out quadrature detection on the reception signals from said corresponding antennas;
    a plurality of equalizers for carrying out equalization using the outputs of said corresponding detecting means;
    selecting means for selecting the outputs of said plurality of equalizers;
    data decision means for deciding data based on the output of said selecting means,

    wherein each of said plurality of equalizers comprises:

    symbol pattern synchronizing means for reproducing symbol timing by detecting said symbol patterns based on the output signals of said detecting means;
    equalizing means for acquiring an equalization signal by multiplying signals extracted from said detection signal at predetermined intervals and weights;
    symbol pattern generating means for generating a reference signal equal to said symbol pattern;
    error calculating means for acquiring an equalization error by subtracting said equalization signal from said reference signal; and
    weight updating means for updating said weights based on said detection signal and said equalization error at the timing of said symbol pattern.

4. The receiver according to claim 3, wherein said weight updating means updates said weights using an error power minimizing algorithm.

5. A receiver for carrying out diversity receiver for a transmission signal with periodically inserted known symbol patterns made up of at least one symbol, said apparatus comprising:

    a plurality of detecting means for carrying out quadrature detection on the reception signals from said corresponding antennas;
    symbol pattern synchronizing means for reproducing symbol timing by detecting said symbol patterns based on said plurality of detection signals;

one or more equalizing means for acquiring equalization signals by multiplying signals extracted from the outputs of said corresponding detecting means at predetermined intervals and weights;

combining means for combining the outputs of said plurality of equalization signals;

symbol pattern generating means for generating a reference signal equal to said symbol pattern;

error calculating means for acquiring an equalization error by subtracting said equalization signal from said reference signal;

one or more weight updating means for updating weights based on said corresponding detection signals and said corresponding equalization errors at the timing of said symbol pattern; and

data decision means for deciding data based on the output of said combining means.

6. The receiver according to claim 5, wherein said weight updating means updates said weights using an error power minimizing algorithm.

7. An equalization method for carrying out equalization processing, said method comprising:

a step of equalizing a detection signal obtained by detecting a transmission signal with periodically inserted known symbol patterns made up of at least one symbol; and

a step of detecting a symbol synchronization position by detecting said symbol patterns based on said detection signal,

wherein equalization processing is carried out based on weights updated when the synchronization position of said detection signal is detected, whereas equalization processing is carried out without weight updating when the synchronization position of said detection signal is not detected.

8. The equalization method according to claim 7, wherein said weight updating is carried out using an error power minimizing algorithm.

9. A reception method for carrying out diversity receiver for a transmission signal with periodically inserted known symbol patterns made up of at least one symbol, said method comprising:

a reception step of receiving said transmission signal by a plurality of antennas;

a detecting step of carrying out quadrature detection on received signals from said corresponding antennas using a plurality of detecting means;

a plurality of equalizing steps of carrying out equalization using the outputs of said corresponding detecting means;

a selecting step of selecting processing results obtained by said plurality of equalizing steps corresponding to said plurality of detecting means; and

a deciding step of deciding data based on said selected processing result;

wherein each of said plurality of equalizing steps comprises: a step of equalizing a detection signal obtained by detecting a transmission signal with periodically inserted known symbol patterns made up of at least one symbol; and a step of detecting a symbol synchronization position by detecting said symbol patterns based on said detection signals, wherein equalization processing is carried out based on weights updated when the synchronization position of said detection signal is detected, whereas equalization processing is carried out without weight updating when the synchronization position of said detection signal is not detected.

10. The reception method according to claim 9, wherein said weight updating is carried out using an error power minimizing algorithm.

11. A reception method for carrying out diversity received for a transmission signal with periodically inserted known symbol patterns made up of at least one symbol, said method comprising:

a step of receiving said transmission signal by a plurality of antennas;

a step of carrying out quadrature detection on received signals from said corresponding antennas using a plurality of detecting means; and

a step of detecting a symbol synchronization position by detecting said symbol patterns based on said plurality of detection signals;

wherein equalization processing is carried out based on weights updated when the synchronization position of said detection signal is detected, whereas equalization processing is carried out without weight updating and the respective outputs of equalization processing are combined with each other when the synchronization position of said detection signal is not detected.

12. The reception method according to claim 11, wherein said weight updating is carried out using an error power minimizing algorithm.

13. A reception method for carrying out diversity receiver for a transmission signal with periodically inserted known symbol patterns made up of at least one symbol, said method comprising:

a step of receiving said transmission signal by a plurality of antennas;

a step of carrying out quadrature detection on received signals from said corresponding antennas using a plurality of detecting means;

a step of detecting a symbol synchronization position by detecting said symbol pattern based on detection signals output from said plurality of detecting means;

wherein equalization processing is carried out based on weights respectively updated when the synchronization position of said detection signal is detected, whereas equalization processing is carried out without updating of respective weights and the respective outputs of equalization processing are combined with each other when the synchronization position of said detection signal is not detected.

14. The reception method according to claim 13, wherein said weight updating is carried out using an error power minimizing algorithm.

# Fig. 1

205 — PILOT SYMBOL PATTERN GENERATOR

207 — FRAME/SYMBOL SYNCHRONIZATION CIRCUIT

206

208 — WEIGHT CONTROL CIRCUIT

201

202 — DETECTION CIRCUIT

QUADRATURE DETECTION

I/Q SIGNAL

203 — EQUALIZATION PROCESSING SECTION

204 — DATA DECISION CIRCUIT

# Fig. 2

QUADRATURE DETECTION

I/Q SIGNAL

101 — nT

102 — nT

WEIGHT CONTROL CIRCUIT

W0

W1

W2

103

106

104

105

DATA DECISION CIRCUIT SUBTRACTER

# Fig. 3

# Fig. 4

Fig. 5

PILOT SYMBOL
PATTERN
GENERATOR
205

FRAME/SYMBOL
SYNCHRONIZATION
CIRCUIT
207

206
+
−

WEIGHT
CONTROL
CIRCUIT
208

201

202
DETECTION
CIRCUIT

203
EQUALIZATION
PROCESSING
SECTION

301
SELECTION
OUTPUT
CIRCUIT

204
DATA
DECISION
CIRCUIT

205A
PILOT SYMBOL
PATTERN
GENERATOR

207A
FRAME/SYMBOL
SYNCHRONIZATION
CIRCUIT

206A
+
−

WEIGHT
CONTROL
CIRCUIT
208A

201A

202A
DETECTION
CIRCUIT

203A
EQUALIZATION
PROCESSING
SECTION

Fig. 6

## Fig. 7

## Fig. 8

| PILOT SYMBOL (P) | INFORMATION SYMBOL (N) | PILOT SYMBOL (P) | INFORMATION SYMBOL (N) |
|---|---|---|---|

1 FRAME

## Fig. 9A

TRANSMISSION FRAME

TRANSMISSION SIGNAL

P | TRANSMISSION INFORMATION | P | TRANSMISSION INFORMATION

Pilot symbol (FIXED PATTERN)

16 QAM TRANSMISSION

Pilot symbol (FIXED PATTERN)

16 QAM TRANSMISSION

Pilot symbol (FIXED PATTERN)

16

## Fig. 9B

PROPAGATION PATH VARIATION (FADING)

RECEPTION SIGNAL R

Pilot symbol  |  16 QAM TRANSMISSION  |  Pilot symbol  |  16 QAM TRANSMISSION  |  Pilot symbol

R(k-1)    R(k-1+m/N)          R(k)    R(k+m/N)          R(k+1)

(FIXED PILOT PATTERN)          (FIXED PILOT PATTERN)          (FIXED PILOT PATTERN)

WHEN m=1 to N-1, RECEIVING TRANSMISSION INFORMATION (WHEN 0, N, RECEIVING PILOT SYMBOL)

# Fig. 9C

CALCULATE REVERSE CHARACTERISTIC OF PHASE SHIFT DISTORTION FROM PHASE OF PILOT SYMBOL

REVERSE
CHARACTERISTIC

INTERPOLATE PHASE USING
$c(k-1)$, $c(K)$, $c(k+1)$ AND
OBTAIN REVERSE
CHARACTERISTIC TAP

REVERSE CHARACTERISTIC
TAP

$c(k-1)$   $c(k-1+m/N)$   $c(k)$   $c(k+1)$

PHASE BECOMES SAME AS PHASE OF TRANSMISSION SIGNAL BY MULTIPLYING RECEPTION SIGNAL BY REVERSE CHARACTERISTIC TAP

AFTER
CORRECTION

RECEPTION*tap   $R(k-1)*c(k-1)$   $R(k-1+m/N)*c(k-1+m/N)$   $R(k)*c(k)$

Fig. 10

## Fig. 11

16 QAM  α＝0.5

SYMBOL TIMING

CODE POSITIONS OF 4 VALUES

Fig. 12

Eb/No [dB]